# EUROPEAN PATENT APPLICATION

(11) **EP 0 998 975 A1**
(43) Date of publication of application: **10.05.2000**
(21) Application number: 99301199.8
(22) Date of filing: 18.02.1999
(51) Int. Cl.: B01J 23/40, C10G 45/52

(54) **Catalyst and method for hydrogenation of hydrocarbon oils**

(30) Priority: 06.11.1998 JP 31663598; 15.12.1998 JP 35634798
(71) Applicant: SUMITOMO METAL MINING COMPANY LIMITED, Tokyo 105 (JP)
(72) Inventor: Kanai, Yuki, Ushiku-shi, Ibaragi Prefecture (JP); Matsuda, Takashi, Ichikawa-shi, Chiba Prefecture (JP); Hideharu, Yokozuka, Tokyo (JP)
(74) Representative: Harrison, Ivor Stanley

(57) **Abstract**

Provided are a catalyst and a method for hydrogenation of hydrocarbon oil containing aromatic hydrocarbons and olefins, which minimize the hydrocracking of the oil being hydrogenated. Preferably, the catalyst comprises, as the active metal, at least one selected from noble metals of Group VIII of the Periodic Table, in which the active metal is carried by a substantially amorphous metal oxides carrier consisting essentially of silicon and magnesium. The carrier has a BET specific surface area falling between 50 m²/g and 800 m²/g. In the carrier, the atomic ratio of Mg/Si falls between 0.25 and 2.0, the active metal selected from noble metals of Group VIII of the Periodic Table is platinum or palladium, or a mixture of platinum and palladium in an atomic ratio Pt/Pd falling between 0.05 and 2.0. In the hydrogenation method, hydrocarbon oil to be processed is contacted with hydrogen and the catalyst at a reaction temperature falling between 150 and 450°C. Typically, crude oil for diesel oil that contains aromatic hydrocarbons and olefins is hydrogenated in such a manner that a product having a boiling point range that falls between 125 and 425°C is produced while the aromatic hydrocarbons and the olefins are substantially converted into their saturated derivatives with substantial hydrocracking of the crude oil being prevented.

## Description

### BACKGROUND OF THE INVENTION

### Field of the Invention:

The present invention relates to a catalyst and a method for hydrogenation of hydrocarbon oils that contain aromatic hydrocarbons and olefins, without substantial hydrocracking of crude oil taking place.

### Description of the Related Art:

A demand for liquid hydrocarbons having a boiling point range between 125°C and 625°C (for example, light gas oil, kerosene, jet fuel, solvents, etc.) is increasing these days. Those liquid hydrocarbons generally contain substantial unsaturated moieties such as aromatic hydrocarbons and olefins, and, in order to obtain products with better oil quality, it is desired to convert them into the corresponding saturated compounds by hydrogeneration. In particular, the existence of aromatic hydrocarbons in those oils brings about air pollution, and therefore, removing the unsaturated compounds in crude oil is being of great industrial importance.

The presence of aromatic hydrocarbons in diesel oils having a typical boiling point range that falls between 200 and 400°C or so lowers the oil quality. One criterion for the quality of diesel oil is the cetane number that is directly related to the types of molecules containing in the oil. Operating diesel engines with diesel oil having a cetane number that is lower than a designed one causes delayed ignition and confused firing, thereby bringing about high-level noises and fumes. The cetane number of hydrocarbons has a close relation with the molecular structures thereof.

Specifically, saturated hydrocarbons have an extremely large cetane number, while the cetane number of aromatic hydrocarbons is very small. For example, of aromatic hydrocarbons, tetralin has an extremely small cetane number of 7 and naphthalene has that of -15. On the other hand, decane of a linear saturated hydrocarbon has an extremely large cetane number of 76, and decalin has that of 48. Therefore, it can be said that hydrogenation of diesel oil for converting aromatic hydrocarbons therein into saturated ones surely improves the quality of the oil.

JP-A-64-66292 discloses hydrogenation with a catalyst comprising one or more noble metals of Group VIII in the Periodic Table on a support wherein the support contains a modified Y-type zeolite having a unit cell size between 24.20 and 24.30 angstroms and silica/alumina molar ratio of at least 25. However, as being highly active also for hydrocracking, the Y-type zeolite is defective in that it induces hydrocracking during the desired hydrogenation to lower the light gas oil yield and that, in addition, the hydrocracking further induces a coke formation to shorten the catalyst life.

JP-A-5-237391 discloses a catalyst comprising one or more Group VIII noble metals on a support wherein the support comprises a zeolite prepared by contacting a starting Y-type zeolite having a unit cell size of less than 24.65 angstroms, a silica to alumina ratio greater than 5, and an alkali or alkaline earth metal content of less than 0.3 weight percent with one or more aqueous solutions comprising alkali or alkaline earth metal under conditions sufficient to provide a final alkali or alkaline earth metal content of at least 1.5 times greater than the alkali or alkaline earth metal content of the starting zeolite. However, the catalyst could not still solve the disadvantages of short catalyst life and poor light gas oil yield.

JP-A-8-283746 discloses a catalyst comprising one or more Group VIII metals in the Periodic Table on a support wherein the support comprises a crystalline clay mineral that consists essentially of silicon and magnesium, and a hydrogenation process using the catalyst. The catalyst disclosed retards a hydrocracking activity resulting an increase in-the light gas oil yield, and its life is greatly improved. However, its hydrogenation activity is still unsatisfactory, because the catalyst is not active enough to hydrogenate high-concentration aromatic hydrocarbons containing in the crude oil.

### SUMMARY OF THE INVENTION

The object of the present invention is to provide a catalyst for hydrogenation of hydrocarbon oil that contains aromatic hydrocarbons and olefins, with which the hydrocracking of the oil being hydrogenated is minimized, and to provide a method for hydrogenation using the catalyst.

The first aspect of the invention to attain the object is a catalyst for hydrogenation of hydrocarbon oil, which comprises, as the active metal, at least one selected from noble metals of Group VIII of the Periodic Table and in which the active metal is carried by a substantially amorphous metal oxides support consisting essentially of silicon and magnesium. In the catalyst, the support preferably has a BET specific surface area falling between 50 m²/g and 800 m²/g. Also preferably, the atomic ratio of Mg/Si in the amorphous metal oxides support falls between 0.25 and 2.0; the active metal selected from noble metals of Group VIII of the Periodic Table is platinum or palladium, or a mixture of platinum and palladium in an atomic ratio Pt/Pd falling between 0.05 and 2.0; and the amount of the active metal carried by the support falls between 0.05 and 8 % by weight relative to the total catalyst.

The second aspect of the invention is a method for hydrogenating hydrocarbon oil that contains hydrogenatable components and has a boiling point range falling between 125 and 625°C, which is characterized in that the hydrocarbon oil is contacted with hydrogen and the hydrogenation catalyst of the first aspect noted above, at a reaction temperature falling between 150 and 450°C. In one preferred embodiment of this aspect, crude oil for diesel light oil that contains aromatic hydrocarbons and olefins is hydrogenated in such a manner that a product having a boiling point range that falls between 125 and 425°C is produced while the aromatic hydrocarbons and the olefins are substantially converted into their saturated derivatives with substantial hydrocracking of the crude oil being prevented.

### BRIEF DESCRIPTION OF THE DRAWING

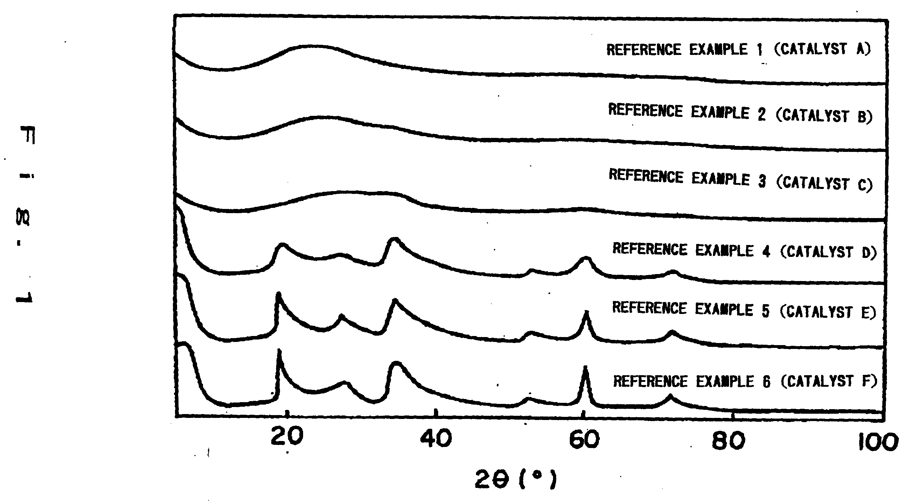

Fig. 1 is a graph showing the X-ray diffraction patterns of catalysts A to F as prepared in Reference Examples 1 to 6.

### DETAILED DESCRIPTION OF THE INVENTION

The catalyst carrier for use in the invention is of a substantially amorphous metal oxides that consist essentially of silicon and magnesium. The substantially amorphous metal oxides that consist essentially of silicon and magnesium as referred to herein is meant to indicate a substantially amorphous metal oxides in which, except for oxygen that is all the time the greatest in number of all elements-constituting the metal oxides, and for hydrogen that is also great in number while existing in the form of water and hydroxyl group, the largest two in number of all constituent elements are silicon and magnesium.

In the metal oxides for use in the invention, the proportion of silicon to magnesium is not specifically defined. For example, the metal oxides may be silicon-rich and magnesium-poor one, or contrary to this, it may be silicon-poor and magnesium-rich one. Preferably, however, the atomic ratio Mg/Si in the metal oxides falls between 0.25 and 2.0. If the atomic ratio Mg/Si is smaller than 0.25 therein, the metal oxides could be amorphous but lowers the activity of the catalyst. However, if larger than 2.0, crystalline metal oxides such as Mg₂SiO₄, MgSiO₃ and MgO are formed readily, which greatly lower the activity of the catalyst.

The amorphous metal oxide may contain minor components such as transition metals and typical metals, in addition to silicon and magnesium.

Metal oxides consisting essentially of silicon and magnesium include "crystalline" ones and "amorphous" ones. The "crystalline" metal oxides are not within the scope of the invention. As crystalline metal oxides consisting essentially of silicon and magnesium, for example, known are stevensite, hectorite, saponite, chlorite, talc, vermiculite, serpentine, antigorite, sepiolite, attapulgite, palygorskite, enstatite, forsterite, protoenstatite, etc. These metal oxides are outside the scope of the invention.

The terminology "crystalline" as referred to herein applies to the condition of a metal oxide that gives at least one or more diffraction peaks in its X-ray diffraction pattern as drawn by the use of a standard X-ray diffractometer; while the other "amorphous" applies to the condition of a metal oxide that gives no diffraction peak in its X-ray diffraction pattern as drawn by the use of it. Some X-ray diffractometry of amorphous metal oxides often gives an extremely broad peak (for example, in X-ray radiation with CuKα, it may appear at 2 θ of around 20° to 40° or so), but the broad peak of that type (this is referred to as a halo in the field of X-ray diffractometry) is peculiar to amorphous substances and should not be counted as the diffraction peak.

The "standard X-ray diffractometer" as referred to herein is a device basically composed of four units of an X-ray generator, a goniometer, a count recorder and a control processor, in which an ordinary Cu X-ray tube is used for diffractometry at a tube voltage of from 20 to 60 kV and a tube current of from 20 to 200 mA.

In the invention, the metal oxide to be used as the catalyst carrier is limited to only an amorphous one. This is because the amorphous metal oxide has excellent solid acid property. In the carrier, the total amount of SiO₂ and MgO is 60 % by weight or larger, but preferably 70 % by weight or larger, more preferably 80 % by weight or larger.

The carrier of the invention may contain a binder. The binder is not specifically defined, and may include crystalline and/or amorphous metal oxides such as alumina, silica, magnesia, boria, titania, zirconia, calcia, silica-alumina, silica-magnesia, etc. However, when a crystalline binder is added to the carrier and even if the X-ray diffraction peak for the additive appears on the X-ray diffraction pattern of the carrier, the carrier containing the binder shall not overstep the scope of the invention. So far as the carrier comprises an amorphous metal oxide consisting essentially of silicon and magnesium, it is within the scope of the invention irrespective of the type of the binder added thereto.

The method for producing the substantially amorphous metal oxides carrier for use in the invention that consists essentially of silicon and magnesium is not specifically defined. The metal oxide carrier may be produced in any method of precipitation, solvent vaporization, sol-gel conversion, pyrolysis, vapor-phase reaction, etc.

As the silicon source for the carrier, employable is any of water glass, alkoxides, chlorides, oxychlorides, alkyl compounds, and other silicon compounds. As the magnesium source for it, employable is any of chlorides, perchlorates, bromides, hydroxides, sulfates, nitrates, carbonates, thiocyanates, phosphates, acetates, oxalates, salts of other organic acids, alkoxides, and other magnesium compounds.

Preferably, the carrier for use in the invention has a BET specific surface area falling between 50 m²/g and 800 m²/g. If the BET surface area of the catalyst carrier is smaller than 50 m²/g, the hydrogenation activity will lower. On the other hand, if larger than 800 m²/g, the mechanical strength of the carrier will be low.

In the invention, the shape of the carrier and the catalyst is not specifically defined. They may be in any form of spherical, cylindrical, columnar, three-leaved, four-leaved and other all shapes. Any ordinary shaping method is employable for producing them. For example, employable is extrusion molding, tabletting, oil-dropping or the like.

The noble metal of Group VIII of the Periodic Table that is used as the active metal with being carried by the carrier to give the catalyst of the invention includes ruthenium, rhodium, palladium, osmium, iridium and platinum. Of those, most preferred is platinum or paraddium, or a mixture of platinum and palladium. The noble metal of Group VIII of the Periodic Table is carried by the carrier in an amount of from 0.05 to 8 % by weight relative to the total catalyst. If the amount of the noble metal carried is smaller than 0.05 % by weight relative to the total catalyst, the catalyst will have poor activity. However, if larger than 8 % by weight, the catalyst will be readily aged to have lowered activity. Where a mixture of platinum and palladium is used as the active metal, the atomic ratio of platinum/palladium therein preferably falls between 0.05 and 2.0. The reason is because, if the atomic ratio is smaller than 0.05 or larger than 2.0, the mixture could hardly exhibit the synergistic effect of palladium and platinum.

The noble metal of Group VIII of the Periodic Table can be applied to the carrier in any ordinary manner, for example, according to a dipping method, an infiltration method, a vapor-phase contacting method, etc. Preferred raw materials for the metal vary, depending on the method employed for making the carrier carry the metal. For example, in an infiltration method, usable are chlorides, nitrates, acetates, ammine complexes, etc. In a vapor-phase contacting method, preferred are carbonyl compounds having a vapor pressure. The metal application to the carrier may be effected before or after shaping the carrier, but preferably effected after shaping it.

The catalyst of the invention may optionally contain any other component of typical elements and transition elements including rare earth elements, in addition to the noble metal of Group VIII of the Periodic Table.

The catalyst of the invention is generally calcined, after the carrier has been shaped. For this, the calcination temperature preferably falls between 400 and 900°C, more preferably between 500 and 800°C. Though not indispensable, pre-treatment for reduction with hydrogen of the catalyst is preferred, which may be effected in a hydrogen stream. For this, the reduction temperature preferably falls between 200 and 500°C, more preferably between 300 and 400°C.

The hydrogenation catalyst of the invention is favorably used for hydrogenating aromatic hydrocarbons and olefins in hydrocarbon oil (especially in diesel oil). Hydrocarbon oil of that type has a boiling point range typically falling between 125 and 625°C, or that is, almost all components (i.e., 90 % by weight or more of all components) constituting it boil at temperatures falling between 125 and 625°C. The preferred boiling point range of such hydrocarbon oil falls between 125 and 425°C.

The hydrogenation catalyst of the invention has a higher level of sulfur and nitrogen tolerance than conventional catalysts. Depending on the level of sulfur and nitrogen existing therein, the hydrocarbon oil to be hydrogenated with the catalyst may be pre-treated for desulfurization and denitrification to lower its sulfur and nitrogen level. The pre-treatment will give better results.

To hydrogenate hydrocarbon oil according to the hydrogenation method of the invention, the catalyst is loaded into a reactor and hydrocarbon oil is treated therewith while hydrogen is introduced into the reactor at a reaction temperature generally falling between 150 and 450°C, preferably between 200 and 400°C, more preferably between 225 and 375°C. In fact, however, it is desirable to vary the reaction temperature in some degree, depending on the property of the hydrocarbon oil to be hydrogenated. For this, it is desirable to previously know the suitable temperature range within which the components capable of being hydrogenated in hydrocarbon oil could be substantially hydrogenated.

The hydrogenation temperature range shall fall generally between 150 and 450°C, as so mentioned hereinabove. This is because, if the temperature is lower than 150°C, the oil being processed could not receive satisfactory heat energy, and, if so, aromatic hydrocarbons therein are extremely difficult to hydrogenate. On the other hand, if the hydrogenation is effected at a temperature higher than 450°C, the concentration of aromatic hydrocarbons in the oil being processed will rather increase owing to the thermodynamical equilibrium limitation.

It is desirable that the hydrogenation is effected under the condition under which at least 75 % of the components capable of being hydrogenated are hydrogenated. Suitable selection of the reaction temperature will make it possible to hydrogenate 90 % by weight or more of the components capable of being hydrogenated with no substantial hydrocracking occurring during the hydrogenation.

Where crude oil for diesel oil that contains aromatic hydrocarbons and olefins is hydrogenated, it may be boiled at a temperature falling between 125 and 425°C to produce the product of diesel oil whereupon the aromatic hydrocarbons and the olefins are substantially converted into their saturated derivatives with substantial hydrocracking of the crude oil being prevented.

In carrying out the hydrogenation method of the invention, the yield of the naphtha fraction (having a boiling point lower than 177°C) to be produced as a result of hydrocracking must be preferably smaller than 5 % by weight, more preferably smaller than 2 % by weight.

In the invention, it is desirable that the hydrogenation is effected at a temperature falling within the temperature range noted above and under pressure. For this, the hydrogen partial pressure may be typically from 2 to 25 MPa, but preferably from 3 to 15 MPa, more preferably from 3 to 10 MPa.

Where the hydrogenation is effected in a fixed-bed flow reactor, the liquid hourly space velocity (LHSV) preferably falls between 0.3 and 8 hr⁻¹, more preferably between 0.4 and 4 hr⁻¹.

The flow rate ratio of hydrogen/hydrocarbon oil in the reaction system preferably falls between 100 and 1500 Nl/l, more preferably between 300 and 1000 Nl/l.

The hydrogenation method of the invention applies to any reactor of a fixed bed, fluidized bed or slurry bed system. In view of its easy industrial applicability, the method is preferably effected in a continuous reactor of a fixed-bed system. In the continuous reactor of a fixed-bed system for the method, the flows of crude oil and hydrogen may be in any form of parallel up-current flows, parallel down-current flows or counter-current flows.

The hydrogenation method of the invention is especially suitable to hydrogenation of diesel oil, kerosene, cycle stock, and mixed oil of those.

The invention is described in detail with reference to the following Examples and Comparative Examples, which, however, are not intended to restrict the scope of the invention.

### Reference Example 1:

216 ml of an aqueous solution of 5 N-NaOH was added to 2833 g of No. 3 water glass, to which was added ion-exchanged water to make 6 liters in total. This is referred to as liquid A. On the other hand, ion-exchanged water was added to 1073 g of magnesium chloride hexahydrate (purity: 98 %) to make 6 liters in total. This is referred to as liquid B. Next, while being kept at 60°C, 8 liters of ion-exchanged water was filled into a 30-liter container, to which were added the liquid A and the liquid B both at a constant rate (100 ml/min) with strongly stirring it. Thus was formed a hydrate precipitate. Next, the precipitate was well washed with water, then molded through extrusion, dried at 110°C for 12 hours, and calcined at 600°C for 3 hours to prepare a silica-magnesia carrier a.

The resulting carrier a had a chemical composition of 80 % by weight of silica and 20 % by weight of magnesia, and its specific surface area as obtained according to the BET adsorption isotherm was 42 m²/g.

The carrier a was dipped in an aqueous solution of a mixture of tetraammine platinum chloride and tetraammine palladium chloride, dried at 110°C for 12 hours, and then calcined at 500°C for 3 hours to prepare a catalyst A. The amount of Pt and Pd carried in the catalyst A was 0.3 % by weight and 0.7 % by weight, respectively.

### Reference Example 2:

A catalyst B was prepared in the same manner as in Reference Example 1, except that the amount of No. 3 water glass used was 2479 g, that of the aqueous solution of 5 N-NaOH used was 1491 ml, and that of magnesium chloride hexahydrate (purity; 98 %) used was 1610 g. The carrier b for the catalyst B had a chemical composition of 70 % by weight of silica and 30 % by weight of magnesia, and its specific surface area as obtained according to the BET adsorption isotherm was 469 m²/g.

### Reference Example 3:

A catalyst C was prepared in the same manner as in Reference Example 1, except that the amount of No. 3 water glass used was 1771 g, that of the aqueous solution of 5 N-NaOH used was 4043 ml, and that of magnesium chloride hexahydrate (purity: 98 %) used was 2683 g. The carrier c for the catalyst C had a chemical composition of 50 % by weight of silica and 50 % by weight of magnesia, and its specific surface area as obtained according to the BET adsorption isotherm was 96 m²/g.

### Reference Example 4:

Stevensite which is a crystalline layered clay mineral having silicon and magnesium as the constituent metal component was used as the raw material for the carrier. Stevensite used herein comprised 26.5 % by weight of silicon, 16.6 % by weight of magnesium and 5.1 % by weight of sodium, and its ion-exchanging capacity was 54 milliequivalents/100 g. This stevensite was put into an aqueous solution of 1 N-ammonium acetate, then ion-exchanged therein at 80°C for 1 hour with stirring it, taken out through filtration, and washed. This was mixed with alumina hydrate, kneaded well, and molded through extrusion.

Next, this was dried at 110°C for 12 hours and then calcined at 600°C for 3 hours to prepare a carrier d. The stevensite content of the resulting carrier d was 80 % by weight, and the specific surface area of the carrier d as obtained according to the BET adsorption isotherm was 224 m²/g. This carrier d was dipped in an aqueous solution of a mixture of tetraammine platinum chloride and tetraammine palladium chloride, dried at 110°C for 12 hours, and then calcined at 500°C for 3 hours to prepare a catalyst D. The amount of Pt and Pd carried in the catalyst D was 0.3% by weight and 0.7 % by weight, respectively.

### Reference Example 5:

A catalyst E was prepared in the same manner as in Reference Example 4, except that hectorite which is a crystalline layered clay mineral having silicon, magnesium and lithium as the constituent metal component was used as the raw material for the carrier. The specific surface area of the carrier e for the catalyst E was 135 m²/g, as obtained according to the BET adsorption isotherm. The hectorite used herein comprised 26.4 % by weight of silicon, 16.6 % by weight of magnesium and 0.5 % by weight of lithium, and had an ion-exchanging capacity of 49 milliequivalents/100 g.

### Reference Example 6:

A catalyst F was prepared in the same manner as in Reference Example 4, except that saponite which is a crystalline layered clay mineral having silicon, magnesium and aluminium as the constituent metal component was used as the raw material for the carrier. The specific surface area of the carrier f for the catalyst F was 233 m²/g, as obtained according to the BET adsorption isotherm. The saponite used herein comprised 24.5% by weight of silicon, 18.0 % by weight of magnesium and 2.7 % by weight of aluminium, and had an ion-exchanging capacity of 71 milliequivalents/100 g.

### Reference Example 7:

2380 g of NaOH (granules having a purity of 95 %) was added to 2833 g of No. 3 water glass, to which was added ion-exchanged water to make 8 liters in total. This is referred to as liquid A. On the other hand, ion-exchanged water was added to 6440 g of magnesium chloride hexahydrate (purity: 98 %) to make 8 liters in total. This is referred to as liquid B. From those liquid A and liquid B, prepared was a silica-magnesia carrier g in the same manner as in Reference Example 1.

The resulting carrier g had a chemical composition of 40 % by weight of silica and 60 % by weight of magnesia, and its specific surface area as obtained according to the BET adsorption isotherm was 36 m²/g.

The carrier g was dipped in an aqueous solution of a mixture of tetraammine platinum chloride and tetraammine palladium chloride, dried at 110°C for 12 hours, and then calcined at 500°C for 3 hours to prepare a catalyst G. The amount of Pt and Pd carried in the catalyst G was 0.3 % by weight and 0.7 % by weight, respectively.

### Reference Example 8:

An ammonium-type US-Y zeolite (HSZ-330HUA (trade name) from Toso Corp.) having an ion-exchanging capacity of 102 milliequivalents/100 g was steamed at 800°C for 5 hours, then put into dilute nitric acid of 0.5 N, heated therein at 80°C for 1 hour with stirring it, and thereafter filtered, washed and dried. The resulting USY zeolite had a ratio of silica/alumina of 37.0, and an Na content of 0.05 % by weight. This USY zeolite was mixed with alumina hydrate, well kneaded, and molded through extrusion. Next, this was dried at 110°C for 12 hours, and then calcined at 500°C for 3 hours to prepare a carrier h.

The USY zeolite content of the resulting carrier h was 70 % by weight, and the specific surface area of the carrier h as obtained according to the BET adsorption isotherm was 521 m²/g.

The carrier h was dipped in an aqueous solution of a mixture of tetraammine platinum chloride and tetraammine palladium chloride, dried at 110°C for 12 hours, and then calcined at 500°C for 3 hours to prepare a catalyst H. The amount of Pt and Pd carried in the catalyst H was 0.3 % by weight and 0.7 % by weight, respectively.

The X-ray diffraction patterns of the catalysts A to F thus prepared in Reference Examples 1 to 6 are in Fig. 1, in which it is known that the catalysts A to C as prepared in Reference Examples 1 to 3 gave no diffraction peak and were all in an amorphous metal oxide condition, while the catalysts D to F as prepared in Reference Examples 4 to 6 gave one or more diffraction peaks and were all in a crystalline metal oxide condition. The condition for the X-ray diffractometry is as follows:

### Condition for X-ray Diffractometry:

Target: Cu
Monochromator: graphite
Voltage: 40 kV
Current: 150 mA
Scanning speed: 4.0°/min
Scanning step: 0.02°/step
Divergence slit: 1°
Scattering slit: 1°
Light-intercepting slit: 0.3 mm
Scanning axis: 2 θ/θ
Scanning range: 3.00° to 120.00°
θ offset: 0.00°
Fixed angle: 0.00°

### Example 1:

The catalyst A as prepared in Reference Example 1 was loaded into a fixed-bed flow reactor, and tested therein for hydrogenation under the condition shown in Table 1 below to evaluate its activity. As crude oil to be hydrogenated, used was desulfurized, straight-run light oil (its property is shown in Table 2 below).

In Table 2, "polycyclic aromatic hydrocarbons" indicate hydrocarbons having bicyclic or higher polycyclic aromatic rings, and "total aromatic hydrocarbons" indicate hydrocarbons having monocyclic or higher polycyclic aromatic rings. To evaluate its activity, the catalyst was loaded into the reactor before the start of reaction, and reduced therein in a hydrogen stream at 320°C for 5 hours. This was cooled to be at 150°C, and the crude oil was introduced into the reactor and then again heated. At the time at which the temperature in the reactor reached 320°C, the reaction started. After having been thus reacted for 40 hours, the product oil was collected.

The amount of the aromatic hydrocarbons in the crude oil and that in the product oil were measured through HPLC (in a back-flush method). The distillation point of the crude oil and that of the processed oil, and the yield of the naphtha fraction (this is the yield of the fraction having a boiling point of lower than 177°C) were measured through gas chromatography of the vaporized gas. The product oil having been obtained after 40 hours reaction was analyzed. From the data of the product oil thus analyzed, the degree of conversion of aromatic hydrocarbons and the yield of the naphtha fraction were obtained. The results are shown in Table 3 below.

### Example 2:

The catalyst B of Reference Example 2 was tested and evaluated for its activity in the same manner as in Example 1, except that it was used herein in place of the catalyst A. The test results are shown in Table 3.

### Example 3:

The catalyst C of Reference Example 3 was tested and evaluated for its activity in the same manner as in Example 1, except that it was used herein in place of the catalyst A. The test results are shown in Table 3.

### Comparative Example 1:

The catalyst D of Reference Example 4 was tested and evaluated for its activity in the same manner as in Example 1, except that it was used herein in place of the catalyst A. The test results are shown in Table 3.

### Comparative Example 2:

The catalyst E of Reference Example 5 was tested and evaluated for its activity in the same manner as in Example 1, except that it was used herein in place of the catalyst A. The test results are shown in Table 3.

### Comparative Example 3:

The catalyst F of Reference Example 6 was tested and evaluated for its activity in the same manner as in Example 1, except that it was used herein in place of the catalyst A. The test results are shown in Table 3.

### Comparative Example 4:

The catalyst G of Reference Example 7 was tested and evaluated for its activity in the same manner as in Example 1, except that it was used herein in place of the catalyst A. The test results are shown in Table 3.

### Comparative Example 5:

The catalyst H of Reference Example 8 was tested and evaluated for its activity in the same manner as in Example 1, except that it was used herein in place of the catalyst A. The test results are shown in Table 3.

**Table 1**

| Reaction Condition | |
|---|---|
| Reaction Pressure | 5 MPa |
| Ratio of Hydrogen/Hydrocarbon oil | 600 Nl/l |
| LHSV | 2.0 hr⁻¹ |
| Reaction Temperature | 320°C |

**Table 2**

| Property of Crude Oil | |
|---|---|
| Sulfur Content | 494 ppm by weight |
| Nitrogen Content | 128 ppm by weight |

| Distillation Point (°C) | |
|---|---|
| (initial boiling point, °C) | 180.2 |
| (10 % distillation, °C) | 255.5 |
| (50 % distillation, °C) | 319.5 |
| (90 % distillation, °C) | 389.3 |
| Amount of Total Aromatic Hydrocarbons (wt.%) | 41.1 |
| Amount of Polycyclic Aromatic Hydrocarbons (wt.%) | 5.8 |

**Table 3**

| | | Carrier | Degree of Conversion of Aromatic Hydrocarbons (%) | Yield of Naphtha Fraction (wt.%) |
|---|---|---|---|---|
| Example 1 | Catalyst A | SiO₂ (80 wt.%)-MgO (20 wt.%) | 65 | 0.2 |
| Example 2 | Catalyst B | SiO₂ (70 wt.%)-MgO (30 wt.%) | 84 | 0.2 |
| Example 3 | Catalyst C | SiO₂ (50 wt.%)-MgO (50 wt.%) | 68 | 0.1 |
| Comparative Example 1 | Catalyst D | Stevensite | 50 | 0.4 |
| Comparative Example 2 | Catalyst E | Hectorite | 40 | 0.3 |
| Comparative Example 3 | Catalyst F | Saponite | 30 | 0.8 |
| Comparative Example 4 | Catalyst G | SiO₂ (40 wt.%)-MgO (60 wt.%) | 35 | 0.1 |
| Comparative Example 5 | Catalyst H | USY Zeolite | 37 | 9.8 |

As is known from Table 3 above, the catalysts A to C of the invention tested in Examples 1 to 3 have a higher degree of hydrogenation activity than the catalyst H as carried on the USY-type zeolite carrier, the catalysts D to F for which were used various crystalline Si-Mg-based clay mineral catalysts, and the catalyst G for which the specific surface area of the carrier used is outside the scope of the invention; and the former gave a reduced yield of the naphtha fraction as produced through hydrocracking, as compared with the catalyst H as carried on the USY-type zeolite carrier. These verify the superiority of the catalysts of the invention having a high degree of hydrogenation of aromatic hydrocarbons while retarding hydrocracking.

According to the invention mentioned in detail hereinabove with reference to its preferred embodiments, there are provided a catalyst for hydrogenation of aromatic hydrocarbons in hydrocarbon oil containing sulfur compounds and nitrogen compounds, which exhibits high hydrogenation activity for such oil while retarding hydrocracking of the oil being processed with it, and also a method for hydrogenation that uses the catalyst. Specifically, the catalyst has the advantage of high activity for hydrogenation of aromatic hydrocarbons in hydrocarbon oil while retarding the hydrocracking of the oil being hydrogenated.

While the invention has been described in detail and with reference to specific embodiments thereof, it will be apparent to one skilled in the art that various changes and modifications can be made therein without departing from the spirit and scope thereof.

## Claims

1. A catalyst for hydrogenation of hydrocarbon oil, which comprises, as the active metal, at least one selected from noble metals of Group VIII of the Periodic Table and in which the active metal is carried by a substantially amorphous metal oxide carrier consisting essentially of silicon and magnesium.

2. The catalyst for hydrogenation of hydrocarbon oil as claimed in claim 1, wherein said carrier has a BET specific surface area falling between 50 m²/g and 800 m²/g.

3. The catalyst for hydrogenation of hydrocarbon oil as claimed in claim 1, wherein the atomic ratio of Mg/Si in said amorphous metal oxide carrier falls between 0.25 and 2.0.

4. The catalyst for hydrogenation of hydrocarbon oil as claimed in claim 1, wherein said active metal selected from noble metals of Group VIII of the Periodic Table is platinum or palladium.

5. The catalyst for hydrogenation of hydrocarbon oil as claimed in claim 1, wherein said active metal selected from noble metals of Group VIII of the Periodic Table is a mixture of platinum and palladium in an atomic ratio Pt/Pd falling between 0.05 and 2.0.

6. The catalyst for hydrogenation of hydrocarbon oil as claimed in claim 4 or 5, wherein the amount of said active metal selected from noble metals of Group VIII of the Periodic Table and carried by the carrier falls between 0.05 and 8 % by weight relative to the total catalyst.

7. The catalyst for hydrogenation of hydrocarbon oil as claimed in claim 1, wherein the total amount of SiO₂ and MgO in said amorphous metal oxide carrier is 60 % by weight or larger.

8. The catalyst for hydrogenation of hydrocarbon oil as claimed in claim 1, for which are used, as the silicon source, any of water glass, alkoxides, chlorides, oxychlorides, alkyl compounds, and other silicon compounds, and as the magnesium source, any of chlorides, perchlorates, bromides, hydroxides, sulfates, nitrates, carbonates, thiocyanates, phosphates, acetates, oxalates, salts of other organic acids, alkoxides, and other magnesium compounds.

9. The catalyst for hydrogenation of hydrocarbon oil as claimed in claim 1, which is, after the active metal has been applied to said amorphous metal oxide carrier thereby to make the carrier carry it, calcined at a temperature falling between 400 and 900°C.

10. A method for hydrogenating hydrocarbon oil that contains components capable of being hydrogenated and has a boiling point range falling between 125 and 625°C, wherein the hydrocarbon oil is contacted with hydrogen along with a hydrogenation catalyst, at a temperature falling between 150 and 450°C, and wherein said hydrogenation catalyst comprises, as the active metal, at least one selected from noble metals of Group VIII of the Periodic Table and with the active metal being carried by a substantially amorphous metal oxide carrier that consists essentially of silicon and magnesium.

11. The method for hydrogenating hydrocarbon oil as claimed in claim 10, wherein crude oil for diesel oil that contains aromatic hydrocarbons and olefins is hydrogenated in such a manner that a product having a boiling point range that falls between 125 and 425°C is produced while said aromatic hydrocarbons and olefins are substantially converted into their saturated derivatives with substantial hydrocracking of said crude oil being prevented.

12. The method for hydrogenating hydrocarbon oil as claimed in claim 10, wherein the method is carried out at a hydrogen partial pressure of from 2 to 25 MPa.

13. The method for hydrogenating hydrocarbon oil as claimed in claim 10, for which is used a fixed-bed flow reactor at LHSV falling between 0.3 and 8 hr⁻¹.

14. The method for hydrogenating hydrocarbon oil as claimed in claim 10, wherein the flow rate ratio of hydrogen/hydrocarbon oil falls between 100 and 1500 Nl/l.
